# EUROPEAN PATENT SPECIFICATION

(11) **EP 4 553 793 B1**
(45) Date of publication and mention of the grant of the patent: **26.08.2026**
(21) Application number: 24199598.4
(22) Date of filing: 10.09.2024
(51) Int. Cl.: G06V 20/58, G06V 40/20

(54) **SYSTEMS AND METHODS FOR CAB NOISE LEVEL REDUCTION USING OBJECT INTELLIGENCE DETECTION**
SYSTEME UND VERFAHREN ZUR REDUZIERUNG DES KABINENLÄRMPEGELS UNTER VERWENDUNG VON OBJEKTINTELLIGENZDETEKTION
SYSTÈMES ET PROCÉDÉS DE RÉDUCTION DU NIVEAU DE BRUIT DE CABINE À L'AIDE D'UNE DÉTECTION D'INTELLIGENCE D'OBJET

(30) Priority: 10.11.2023 US 202318506550
(43) Date of publication of application: 14.05.2025
(73) Proprietor: Deere & Company, Moline, IL 61265 (US)
(72) Inventor: JONES, Amy, Dubuque, 52001 (US)
(74) Representative: Reddie & Grose LLP

(56) References cited:
- US-A1- 2020 384 916
- US-A1- 2021 261 136
- US-A1- 2022 205 224

## Description

### FIELD OF THE DISCLOSURE

The present disclosure generally relates to communication of surrounding environment features to operators of work vehicles, and, more specifically, to automatic detection and notification of such surrounding environment features to operators of work vehicles via use of object detection intelligence.

### BACKGROUND

Work vehicles operate in work areas to accomplish such tasks as earth moving, agricultural tasks, hauling, and other tasks with occasional or frequent movement of the work vehicle to locations in or outside of a work area. The work vehicle may have one or more work tools or implements that are operated in the work area to accomplish tasks. Multiple work vehicles, other equipment, personnel, and/or mobile and/or fixed objects may also operate and/or be positioned in or around the work area. Thus, at least in certain situations, operators of work vehicles may need to seek to balance between at least concentrating on the tasks the operator is performing via controlling operation of the work vehicle and an awareness of the other work vehicles, equipment, and other personnel and objects within or around the work area. Yet, at times it can be difficult to maintain such awareness of objects within, or outside of, the work area, as well as associated changes in the positions of such objects, while also concentrating on at least controlling the work vehicle while performing a task. US 2020/384916 A1 relates to a driving assistance apparatus including a processor configured to detect a state of surroundings of a mobile body, and reduce, when an object is detected during when a stationary sound is continuously output to a subject by using a plurality of sound sources that are arranged around the subject aboard the mobile body, output of the stationary sound toward the subject from a direction in which the object is detected. US 2021/261136 A1 describes a processing device including: a calculation unit that is configured to detect a position of an object that is a possible obstacle to a vehicle; a first detection unit that is configured to detect a direction of a line of sight of a driver of the vehicle; a decision unit that is configured to decide an aspect of an alarm on the basis of the position and the direction of the line of sight of the driver; and a control unit that is configured to control a speaker corresponding to the position such that a sound of the aspect is output.

### SUMMARY

The invention is defined by the appended claims.

The present disclosure may comprise one or more of the following features and combinations thereof.

In one embodiment of the present disclosure, an object intelligence detection system is disclosed for providing a notification of a detected object to an operator of a work vehicle. The object intelligence detection system can comprise at least one sensor that can be configured to provide a captured information indicative of a presence of the detected object at a location outside of the work vehicle. The object intelligence detection system can also include a sound emission device that can generate or emit a sound that is detectable by the operator in an operator cab associated with the work vehicle, at least one processor, and a memory device. The memory device can be coupled to the at least one processor and include instructions that when executed by the at least one processor cause the at least one processor to detect, from at least the captured information, the presence of the detected object, and generate, in response to at least the detection of the presence of the detected object, a signal to adjust an operation of the sound emission device in a manner that reduces a sound level within the operator cab to a reduced sound level.

In another embodiment, an object intelligence detection system is provided for controlling a sound level within an operator cab associated with a work vehicle. The object intelligence detection system can comprise a first sensor system that can be configured to sense a first captured information indicative of a task being performed by the work vehicle, and a first sound emission device, that, by an operation of the first sound emission device, generates or emits a first sound that is detectable by an operator within the operator cab. The object intelligence detection system can also include at least one processor and a memory device coupled to the at least one processor. The memory device can include instructions that when executed by the at least one processor can cause the at least one processor to identify, from at least the first captured information, the task being performed by work vehicle, and determine the task, as identified, qualifies for a first adjustment of the sound level within the operator cab. Additionally, the memory device can further include instructions that when executed by the at least one processor can cause the at least one processor to generate, in response to the determination the task qualifies for the adjustment of the sound level, a first signal to adjust the operation of the first sound emission device in a manner that reduces the sound level to a first reduced sound level.

In a further embodiment of the present disclosure, an object intelligence detection system is provided for controlling a sound level within an operator cab associated with a work vehicle. The object intelligence detection system can comprise a location system that can be configured to identify a location of the work vehicle, and a first sound emission device that can operate in a manner that generates or emits a first sound that is detectable by the operator in the operator cab. The object intelligence detection system can also include at least one processor and a memory device. The memory device can include instructions that when executed by the at least one processor cause the at least one processor to determine the location of the work vehicle relative to a work zone location, the work zone location being identified by the processor from a project map. Additionally, memory device can further include instructions that when executed by the at least one processor cause the at least one processor to generate, in response to the determination of the location of the work vehicle relative to the work zone location, a first signal to adjust an operation of the first sound emission device in a manner that reduces a sound level within the operator cab to a first reduced sound level.

These and other features of the present disclosure will become more apparent from the following description of the illustrative embodiments.

### BRIEF DESCRIPTION OF THE DRAWINGS

The disclosure contained herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements.
Figure 1 illustrates a front perspective view of an exemplary work vehicle having an implement in the form of a trencher.
Figure 2 illustrates a top view of a simplified representation of the work vehicle and objects, including, another worker, positioned at different areas outside of the work vehicle.
Figure 3 illustrates a top view of a simplified representation of an interior area of an exemplary operator cab for a work vehicle.
Figure 4 illustrates a simplified block diagram of an exemplary object intelligence detection system.
Figures 5-8 illustrate exemplary methods for operation of an object intelligence detection system to selectively adjust sound levels or volumes within an operator cab.

Corresponding reference numerals are used to indicate corresponding parts throughout the several views.

### DETAILED DESCRIPTION

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

A number of features described below may be illustrated in the drawings in phantom. Depiction of certain features in phantom is intended to convey that those features may be hidden or present in one or more embodiments, while not necessarily present in other embodiments. Additionally, in the one or more embodiments in which those features may be present, illustration of the features in phantom is intended to convey that the features may have location(s) and/or position(s) different from the locations(s) and/or position(s) shown.

The embodiments of the present disclosure described below are not intended to be exhaustive or to limit the disclosure to the precise forms in the following detailed description. Rather, the embodiments are chosen and described so that others skilled in the art may appreciate and understand the principles and practices of the present disclosure.

Embodiments of the subject disclosure generally relate to an object intelligence detection system in which changes an operation of one or more systems or devices of a work vehicle are at least temporarily adjusted to reduce a sound level or volume within an operator cab of, or associated with, the work vehicle. Such adjustments in operation, and corresponding reductions in the associated generated or emitted sound levels, are utilized to provide an alert or notification to the operator of the work vehicle. Moreover, the systems disclosed herein utilize at least temporary changes in the operation of components or systems of the work vehicle to facilitate at least a reduction in sound level within the operator cab in a manner that at least seeks to attain or redirect the attention of the operator of the work vehicle. Further, the operational changes, and associated sound level reduction, among other forms of notification or alert for the operator, can be triggered at least in response to detection by one or more sensor systems of an object detection sensor system of a detected object, including detection of a presence of the detected object, identification of a location of the detected object, or recognition of a predetermined action or movement by the detected object, as well as combinations thereof, among other characteristics relating to the detected object.

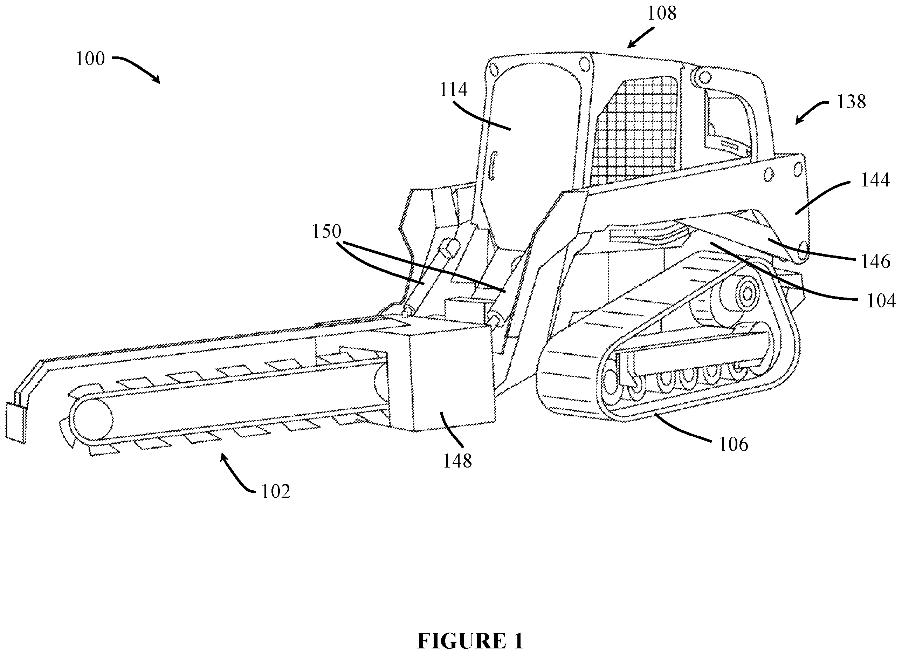

Figure 1 illustrates a front perspective view of an exemplary work vehicle 100 coupled to a work tool or implement 102. While the implement 102 to which the work vehicle 100 is coupled in Figure 1 is a trencher, the work vehicle 100 can be coupled to a variety of other implements, including, but not limited to, a bucket, dozer blade, forks, grapple, or auger, among other implements. Similarly, while the work vehicle 100 shown in Figure 1 is a compact track loader, the work vehicle can take other forms, including, but not limited to, skid steers, compact excavators, or compact wheel loaders, among other types of agricultural, construction, or forestry work vehicles.

The work vehicle 100 includes a frame 104 that is coupled to at least one ground engagement body 106, including, for example, a track, wheel, or tire, among other forms of engagement bodies. The ground engagement body 106 can be configured to at least assist in supporting the frame 104 above the ground, as well as in connection with the movement of the of the work vehicle 100 along the adjacent ground surface.

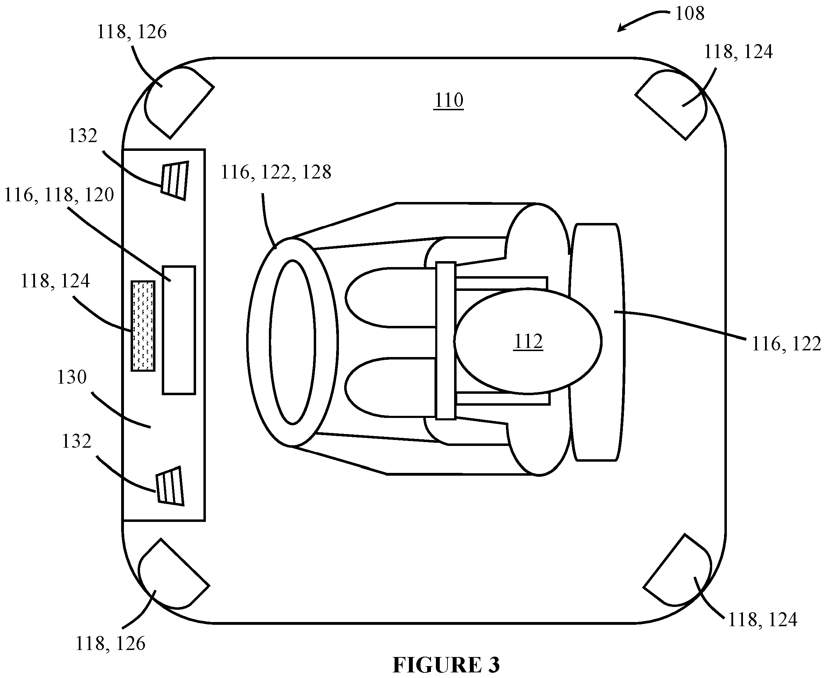

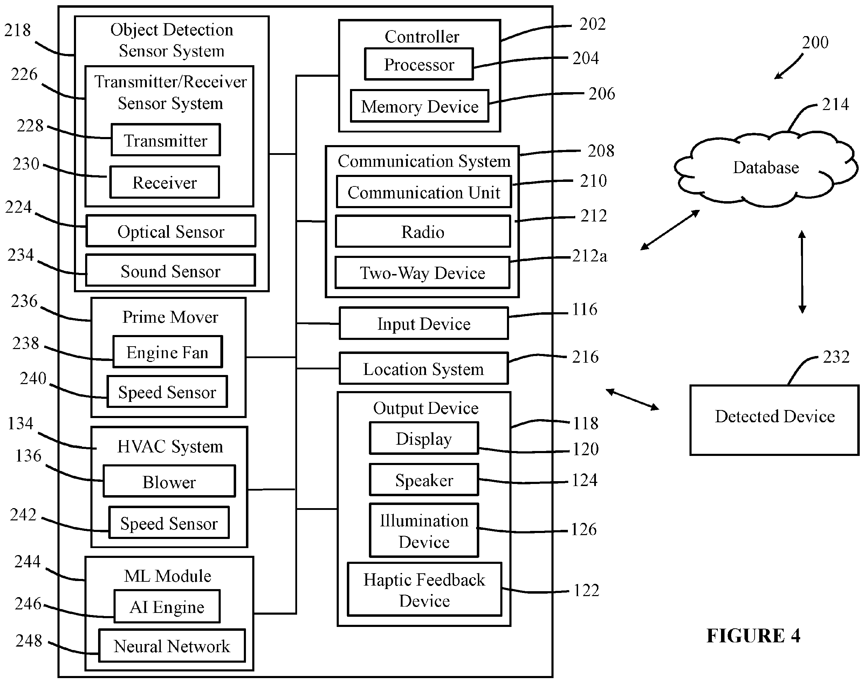

The work vehicle 100 can include an operator cab 108 that can, according to certain embodiments, be coupled to the frame 104. Additionally, or alternatively, the operator cab 108 can be remotely located relative to the frame 104, including, for example, in connection with remote operation of the work vehicle 100. According to certain embodiments, the operator cab 108 can include an interior area 110 in which an operator 112 can be located while operating the work vehicle 100. In the illustrated embodiments, the interior area 110 can be accessible via a door 114 of the operator cab 108. As discussed below with respect to at least Figures 3 and 4, the operator cab 108 can include input devices 116 and output devices 118, as well as combinations thereof, that are utilized in connection with the communication to/from the operator of the work vehicle 100. Examples of input devices 116 include, but are not limited to, a keyboard, keypad, mouse, touch screen, microphone, or joystick, as well as combinations thereof, among other input devices 116. Examples of output devices 118 include, but are not limited to, a display, monitor, or touchscreen (collectively, referred to herein as a display 120), haptic feedback device 122, speaker 124, or illumination device 126, among other output devices 118.

According to certain embodiments, the input and output devices 116, 118 can be part of, or incorporated into, the same device. For example, the display 120 can be a touchscreen monitor, and a haptic feedback device 122 can be part of an input device 116, such as, for example, either or both a steering wheel 128 and a joystick. The haptic feedback device 122 can additionally, or alternatively, be incorporated into other devices or items in the operator cab 108, including, for example, a seat on which an operator 112 can be seated, among other devices. Further, according to certain embodiments, one or more input and output devices 116, 118 can be located on a console 130 within the operator cab 108. Such a console 130 can also include other components of the work vehicle 100, such as, for example, one or more vents 132 utilized to transmit air from a heating and air condition (HVAC) system 134 or a blower 136 (Figure 4) into the interior area 110 within the operator cab 108.

With respect to an output device 118 in the form of an illumination device 126, one or more illumination devices 126, including, for example, lights, can be positioned at various locations about the operator cab 108, including, for example, about or around at least a portion of one or more windows through which the operator 112 can view at least portions of the surrounding area. Additionally, one or more of the illumination devices 126 can be configured to be illuminated in manner that is different than at least other illumination devices 126, including, for example, with respect to one or more of an illumination color or colors, illumination pattern(s), or type or manner of illumination, among other variations.

With respect to the speaker 124, according to certain embodiments, the speaker 124 can comprise a plurality of speakers 124. One or more speakers 124, or, alternatively, different speakers 124, can also be utilized to transmit information communicated from sources outside of the work vehicle 100, including, for example, an AM radio, FM radio, terrestrial radio, satellite radio, ham radio, two-way radio, walkie-talkie, as well as various combinations thereof, among other types of radios.

At least certain types of work vehicles 100 can include a boom assembly 138 that is pivotally coupled to the frame 104 by a pair of upper links 140 and a pair of lower links 142. The boom assembly 138 can also include a pair of boom arms 144 that are pivotally coupled to one or more boom cylinders 146. The boom cylinders 146, which can be hydraulic, pneumatic, or electronic actuators, are configured to move the boom assembly 138, including the boom arms 144, between raised and lowered positions, as well as positions therebetween.

An attachment coupler 148 can be coupled to a distal portion of the boom assembly 138 and utilized to couple the implement 102 to the work vehicle 100. A plurality of tilt cylinders 150, such as, for example, hydraulic, pneumatic, or electronic actuators, can be coupled to the boom assembly 138 and the attachment coupler 148, and be configured to move or tilt the attachment coupler 148, and thus displace the implement 102 that is coupled to the attachment coupler 148.

Figure 4 illustrates a simplified block diagram of an exemplary object intelligence detection system 200. The illustrated object intelligence detection system 200 can include a controller 202 that can include one or more processors 204. The processor 204 can follow instructions, including control instructions, contained on one or more memory devices 206, including, for example, a non-transitory machine-readable medium. While a single controller 202 is illustrated, the controller 202 can comprise a plurality of controllers that may, or may not, be dedicated to particular functions or features of the work vehicle 100. Moreover, the controller 202 can be utilized for one or more particular functions, or a plurality of different functions, relating to the operation of the work vehicle 100. For example, according to an illustrated embodiment, the controller 202 can be utilized in connection with, or performance of features similar to, a recognition system, and, moreover, in connection with object detection. Additionally, as discussed below, the controller 202 can also be utilized in connection with controlling sounds, including volumes, relating to the operation of the work vehicle 100 or associated systems that can be heard in the interior area 110 of the operator cab 108, or are otherwise emitted into the interior area 110 of the operator cab 108. Further, as also discussed below, the controller 202 can be configured to control such sounds, including the associated volumes, as well as generate signals to provide notifications or alters via one or more output devices 118 based at least in part on objection detection information attained or derived by, or otherwise communicated to, to the controller 202.

The object intelligence detection system 200 can also include a communication system 208 that can include a communication unit 210 and one or more radios 212, including, but not limited to, two-way radio or device 212a. The communication unit can be configured to support or provide communications between the controller 202 of the work vehicle 100 and external systems, such as, for example, an external or secondary device 214. The communication unit 210 can include wireless communication system components (e.g., via cellular, Wi-Fi, Bluetooth or the like) and/or can include one or more wired communications terminals, such as universal serial bus ports, among others. According to certain embodiments, the communication unit 210 can be communicatively coupled to a network, including, for example, via internet, cellular, and/or Wi-Fi networks. Such connection to the network can facilitate an exchange of information, including information between the work vehicle 100 and the secondary device 214.

A variety of different devices, systems, or vehicles, or combinations thereof, can be utilized for the secondary device 214, including, for example, a central database, a remote database, a cloud-based server or database, or other work vehicles, as well as combinations thereof. As discussed below, according to certain embodiments, the communication unit 210 can be configured to retrieve, as well as provide or update, a project map from/to the secondary device 214 that can provide information relating to a jobsite or location at which the work vehicle 100 is being, or will be, operated. Such a project map can include a variety of different information, including, for example, information and associated details regarding work, such as, for example, construction, demolition, loading, or unloading that will be, and/or is being, performed at a particular location. Such a project map can also provide a variety of other information, such as, for example, the locations of objects, including structures such as, for example, buildings, fences, or roads, and property boundaries or lines, among other information.

The object intelligence detection system 200 can also include a location system 216 that can be operated to provide a detailed indication of the location of the work vehicle 100. According to certain embodiments, the location system 216 can comprise a global positioning system (GPS) or a radar system, among other location systems. According to certain embodiments, the location system 216 can include a receiver at the work vehicle 100 that can receive information from an external source that can indicate, or be used to determine, the particular location of the work vehicle 100, including, for example, via location coordinates.

The object intelligence detection system 200 can further include an object detection sensor system 218 that is configured to capture or otherwise obtain information, generally referred to herein as captured information, that can be used to identify the presence of object in or around a work zone about the work vehicle 100. Additionally, the object detection sensor system 218 can be configured to obtain captured information that can be utilized, such as, for example, via the controller 202, to identify from the captured information an object type, such as, for example, person or structure. Additionally, or alternatively, the object detection sensor system 218 can be configured to attain information that can be used to identify a performance of a particular action by a detected object, such as, for example, performance of a task by another work vehicle or one or more gestures by an individual, including, for example, a raising or waving of an arm(s) or hand(s), among other motions, by a person outside of the work vehicle 100. As discussed below, information detected from the captured information obtained by the object detection sensor system 218 can be used, such as, for example, by the controller 202, in connection with a decision of whether to adjust operations of systems or devices of the work vehicle that generate or emits sounds so as to adjust sound levels or volumes within the interior area of the operator cab 108, and with respect to activation of secondary notifications within the interior area 110 of the operator cab 108. The captured information provided to at least the controller 202 by the object detection sensor system 218 can also provide information regarding either or both a distance or a location of a detected object from, or relative to, the work vehicle 100, or a portion of the work vehicle 100.

A detected object can correspond to objects and items detected by, or from, the captured information, whose presence in the vicinity of the work vehicle may potentially present, or relate to, a safety concern to/for the detected object, the work vehicle 100, or the operator of the work vehicle 100. Thus, detected objects can include, for example, a person, building, equipment, vehicle, machinery, post, or fence, as well as combinations thereof, among other types of detected objects. Additionally, or alternatively, the detected object can correspond to an individual who is performing a particular movement or action, including, for example, a hand gesture of movement, in at least an attempt to communicate with an operator of the work vehicle 100, or equipment or vehicles around the work vehicle 100 performing certain predetermined tasks or movements.

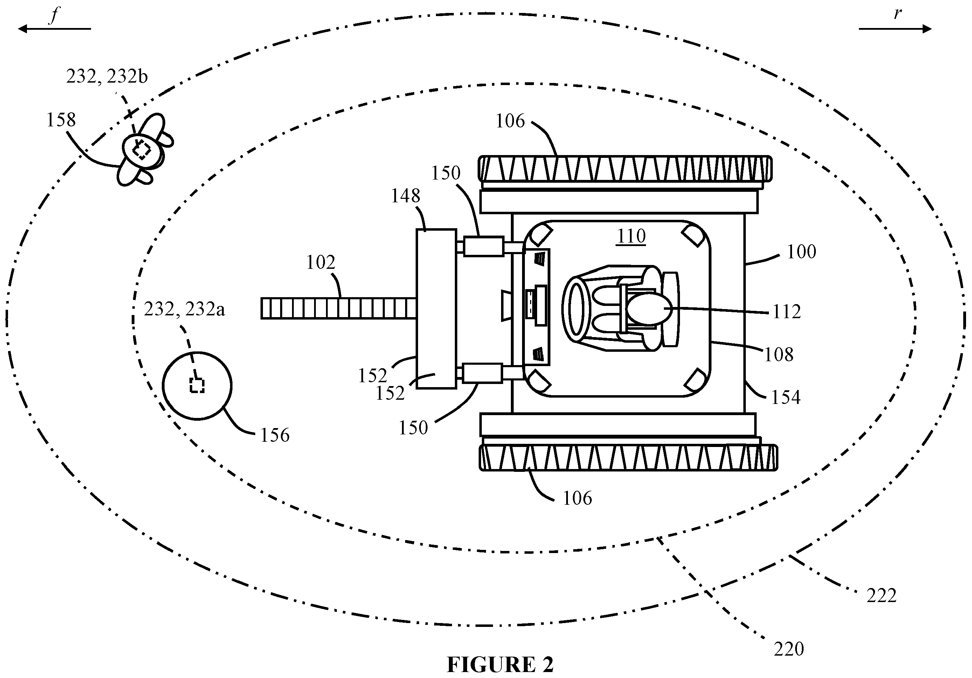

For example, Figure 2 illustrates a plurality of zones 220, 222 about the work vehicle 100, and, more specifically, a primary zone 220 and a secondary zone 222. As illustrated, the primary zone 220 can, according to certain embodiments, encompass at least a portion of an area around, and extends a distance beyond, the work vehicle 100, while the secondary zone 222 encompasses at least a portion of an area beyond, or outside of, the primary zone 220. In the illustrated embodiment, one or both of the primary and secondary zones 220, 222 can be asymmetrical relative to the work vehicle 100. For example, as the work vehicle 100 travels in a forward direction (as generally indicated by direction "*f*" in Figure 2), the primary and secondary zones 220, 222 can extend a distance from a front end 152 of the work vehicle 100 that is greater than a distance from which the primary and secondary zones 220, 222 extend from an opposing rear end 154 of the work vehicle 100. Conversely, when the work vehicle 100 travels in a rearward direction (as generally indicated by direction "*r*" in Figure 2), the primary and secondary zones 220, 222 can extend a distance from the rear end 154 of the work vehicle 100 that is greater than a distance from which the primary and secondary zones 220, 222 extend from the front end 152 of the work vehicle 100. Thus, according to such an embodiment, the size or position of the primary or secondary zones 220, 224 as well as the number of zones 220, 224 can be dynamic based on a direction of travel of the work vehicle 100. Additionally, or alternatively, the size, position, or number of zones 220, 224, or combinations thereof, can be dynamically adjusted based on other criteria, including for example, a speed of travel of the work vehicle 100, the type of operation being performed by the work vehicle 100, or the types of detected objects present or anticipated to be present in the area of the work vehicle 100, as may be indicated by captured information or the project map, among other considerations. However, according to other embodiments, the size, shape, or number of zones 220, 224, as well as combinations thereof, can be generally static, including static relative to the position of the work vehicle 100 or the work zone in which the work vehicle 100 is, or will be, performing, a task. Additionally, while Figure 2 illustrates primary and secondary zones 220, 222 having similar elliptical shapes, the one or more zones 220, 224 can have variety of different shapes, or combination of shapes. Additionally, the shape and/or size of the primary zone 220 may be different than the shape and/or size of the secondary zone 224.

A variety of different types of sensors, or combinations of sensors, can be utilized by, or for, the object detection sensor system 218. For example, according to certain embodiments, the object detection sensor system 218 can include a first sensor system in the form of a visual recognition or optical system that includes at least one optical sensor 224, such as, for example, a stereo depth camera, stereo sensor, or RGBD (red, green, blue, depth) camera, among others. Additionally, or alternatively, the object detection sensor system 218 can include one or more second sensor systems in the form of a transmitter/receiver sensor system 226 that can include a transmitter 228 and a receiver 230. The type of transmitter 228 and receiver 230 can vary based on the particular type of sensor system utilized for the transmitter/receiver sensor system 226. Moreover, the transmitter/receiver sensor system 226 can comprise one or more of a radar system, ultrasonic system, LIDAR system, radio frequency identifier (RFID) system, sonar system, a radio frequency (RF) detector system, or Bluetooth detection system, among others, as well as combinations thereof.

Depending at least in part on the type of transmitter/receiver sensor system 226, if any, utilized by the object detection sensor system 218, the object intelligence detection system 200 can further include a detection device 232. The type of detection device 232, including, for example, whether the detection device 232 comprises one or more of a transmitter, receiver, beacon, or tag, can be at least partially based on the particular type of system utilized for the transmitter/receiver sensor system 226. For example, according to embodiments in which the object detection sensor system 218 comprises a RFID system, the detection device 232 can comprise a passive or active RFID device having a receiver, transmitter, and RFID tag. Additionally, or alternatively, according to embodiments in which the object detection sensor system 218 comprises a Bluetooth detection system, the detection device 232 can comprise a Bluetooth beacon. Similarly, according to other embodiments in which the object detection sensor system 218 comprises am RF detector system, the detection device 232 can comprise a RF transmitter.

In addition to being configured to capture information utilized with respect to at least object detection, according to certain embodiments, the object detection sensor system 218 can further include one or more sound sensors 234 configured to detect sound levels, such as, for example, sound levels in one or more of the interior area 110 of the operator cab 108, an engine compartment of the work vehicle 100, or a system of the work vehicle 100. According to certain embodiments, the sound sensor 234 can be a decibel sensor or meter, among other types of sound sensors. The sound sensor 234 can provide an indication to at least the controller 202 of a sound level in, or being transmitted to, the interior area 110 of the operator cab 108. Additionally, according to certain embodiments, the sound sensor 234 can be part of a feedback system used by the controller 202 to determine whether adjustments in the sound level have, or have not, occurred within the interior area 110 of the operator cab 108, the actual extent of such changes in the sound levels within the interior area 110 of the operator cab 108, or whether further adjustments are to be utilized to further reduce sound levels within the interior area 110 of the operator cab 108.

As seen in Figure 4, the object intelligence detection system 200 can further include a prime mover of the work vehicle 100, such as, for example, a combustion, electric, or hybrid motor or engine used to provide power to propel the work vehicle 100 in at least the forward direction, as well as include components or systems associated with the prime mover 236. The object intelligence detection system 200 can be configured to facilitate an adjustment, at least temporarily, of the operation of the prime mover 236, or of one or more components associated with the operation of the prime mover 236, in a manner that can at least temporarily reduce the level of sound generated and/or emitted from operation of the prime mover 236 or associated components so as to reduce the sound level in the interior area 110 of the operator cab 108. For example, according to certain embodiments, in addition to, or in lieu of, the prime mover 236, the object intelligence detection system 200 can be configured to facilitate an adjustment in the operation of an engine fan 238. Moreover, the controller 202 can, in response to information obtained from at least the captured information, generate a signal to adjust an operation of the engine fan 238 in a manner that can at least temporarily reduce the rotational speed of the engine fan 238, as may be indicated by a speed sensor 240. By controlling of the speed of rotation of the engine fan 238, the controller 202 can control the amount of noise transmitted from the operation of the engine fan 238 to the interior area 110 of the operator cab 108. Moreover, by at least temporarily reducing the rotational speed of the engine fan 238, the controller 202 can reduce the level or sound or noise within the interior area 110 of the operator cab 108 that is associated with the operation of the engine fan 238. Additionally, or alternatively, according to certain embodiments, the controller 202 can similarly, in response to information obtained from at least the captured information, control an engine speed of the prime mover 236, among other operations or components of the prime mover 236, or an operational speed of the implement 102, in connection with at least attempts to at least temporarily reduce the sound level within the interior area 110 of the operator cab 108.

The object intelligence detection system 200 can also be configured to generate a signal to facilitate an adjustment in the operation of the HVAC system 134, including adjusting operation of a blower 136 of the HVAC system 134. Moreover, the controller 202 can control at least certain aspects of the HVAC system 134 so as to, in response to information obtained from at least the captured information, reduce sound levels within the interior area 110 of the operator cab 108. For example, according to certain embodiments, in response to certain information obtained or derived from the captured information, the controller 202 can generate a signal to at least temporarily suspend, or reduce the speed of the blower 136, thereby controlling the rate at which air, if any, is being propelled out of the one or more vents 132 in the operator cab 108. Such changes in the operation of the blower or rate at which air is flowing through the vents 132 can reduce the sound level within the interior area 110 of the operator cab 108. The controller 202 can also receive information from a speed sensor 242 of the blower 136 that can provide an indication of the speed at which the blower 136 is operated, or the speed to which the controller 202 has, at least temporarily, adjusted the speed of the blower 136.

As discussed herein, the controller 202 can also include a machine learning (ML) sound module 244 that can adjust one or more settings of the work vehicle 100, or components thereof, to adjust the sound level within the interior area 110 of the operator cab 108. For example, as discussed below, the sound module 244 can generate control settings that can be used to generate signals to adjust one or more of either or both a speed of the engine fan 238 or the blower 136, among other components of the work vehicle 100. The sound module 244 can also be utilized to generate control settings for a volume outputted by one or more speakers 124 that transmits sounds from the radio 212, including, for example, a two-way radio 212a, or a directional output of sound emitted from one or more of the speakers 124. Additionally, or alternatively, the sound module 244 can generate control settings to control an illumination of the illumination device 126, including brightness, color, or illumination pattern, among adjustments in other components or systems of the work vehicle 100 that can adjust the sound level within the operator cab 108. Such control settings can be derived, and updated, via use of at least a sound module 244 based on one or more models, including algorithms, and input information. Such input information can include feedback information, such as, for example, information provided by, or derived from, the input device 116 regarding whether the operator of the work vehicle 100 acknowledged or responded to the change in sound level in the operator cab 108, the time duration before an acknowledgement was made by the operator of the change in sound level in the operator cab 108, or the sound level attained in the operator cab 108 that resulted in receipt of the acknowledgement from the operator, as well as combinations thereof, among other information. Such feedback information can further include an indication of whether, following the reduction in sound level in the operator cab 108, the work vehicle 100 did, or did not contact a detected object, or the distance at which the work vehicle 100 came to the detected object after the adjustment in the sound level and before the operator provided an acknowledgement to the reduction in the sound level within the operator cab 108.

According to certain embodiments, the machine learning for either or both the development and refinement of the model(s), including algorithms, used by the sound module 244 can be via training of a neural network 246 of an artificial intelligence (AI) engine 248. Additionally, or alternatively, the sound module 244 can be located at the secondary device 214, and the secondary device 214 therefore can include the neural network 190 and artificial AI engine 248. Further, a feedback module, which can be located at either or both the work vehicle 100 or the secondary device 214, can include a recording of selections, including adjustments, made by an operator to the control settings communicated by, or from, the sound module 244. Such operator selections can include, for example, which components or systems of the work vehicle 100, including output devices 118, are, or are not, to be adjustable by the controller 202 to at least temporarily adjust the sound level in the operator cab 108 in response to detection of objects by the object detection sensor system 218, as well as the extent or type of such adjustments.

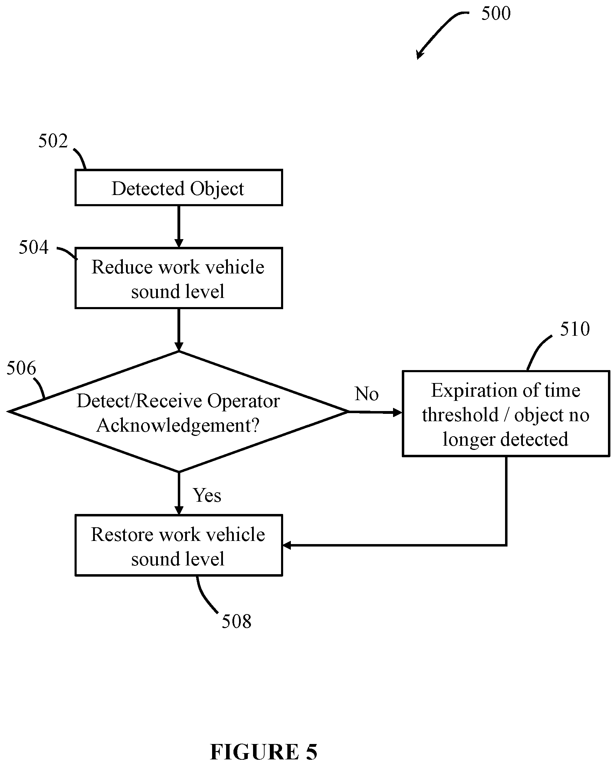

Figure 5 illustrates a simplified flow diagram of an exemplary method 500 for operation of an object intelligence detection system 200 to selectively adjust sound levels within an operator cab 108. The method 500 is described below in the context of being carried out by the illustrated exemplary object intelligence detection system 200. However, it should be appreciated that the method 500 can likewise be carried out by any of the other described implementations, as well as variations thereof. Further, the method 500 corresponds to, or is otherwise associated with, performance of the blocks described below in the illustrative sequence of Figure 5. It should be appreciated, however, that the method 500 can be performed in one or more sequences different from the illustrative sequence. Additionally, one or more of the blocks mentioned below may not be performed, and the method 500 can include steps or processes other than those discussed below.

At block 502, the object intelligence detection system 200 can, via the object detection sensor system 218, capture information that the controller 202 can utilize to detect or identify the presence of an object around, or in the vicinity of, the work vehicle 100. As indicated above, according to certain embodiments, the object detection sensor system 218 can comprise one or more types of sensor systems that do not detect or receive a response signal from a detection device 232, including, for example, one or more of a radar, ultrasonic, LIDAR, sonar, or optical / vision system. With respect to such embodiments, the controller 202 can be configured to identify detected objects from the captured information in a variety of manners, including, for example, based on the physical size, color, or position of the detected object in the captured information. Such characteristics can also assist the controller 202 in distinguishing information that corresponds to detected objects from information in the captured information that relates to other, secondary objects, including, but not limited to, the ground surface or rocks, among other secondary objects.

Additionally, or alternatively, the controller 202 can be configured to determine the presence of a detected object in the captured information based on the controller 202 identifying a particular action, movement, or position from the captured information. For example, in certain embodiments, the detected object can be identified, at least in part, by the controller 202 detecting, from the captured information, a gesture, signal, or movement of an individual outside of the work vehicle 100, including the waving of an arm, a facial expression, or a hand gesture, among other movements or gestures. Further, according to certain embodiments, the detected object can be identified by the controller 202 from the captured information based on the captured information providing a certain combination of attributes, including, for example, a combination of two or more of a physical characteristic (e.g., physical size or color(s)), a location relative to the work vehicle 100, and particular action or movement, among other attributes. Additionally, the controller 202 can be configured to recognize certain types of predetermined movements or actions that are to indicate to the controller 202 the presence of a detected object. For example, according to certain embodiments, the controller 202 can be configured to identify particular hand gestures captured in the captured information providing an indication to the controller 202 of the presence of a detected object, and distinguish such gestures from other movements, such as, for example, an individual walking in a direction away from the work vehicle 100.

Additionally, or alternatively, the controller 202 can be configured to identify from information provided by the object detection sensor system 218 the detection of a signal, including a response signal, from a detection device 232. For example, as previously mentioned, according to certain embodiments, the detection device 232 can be one or more of a transmitter/receiver, identification tag, or beacon that can be associated with a RF system, RFID system, or Bluetooth detection system of the object detection sensor system 218. For example, Figure 2 illustrates an example in which a first detection device 232a is positioned in/on a structure 156, such as, for example, a post, and a second detection device 232b is position in/on an accessory of a worker 158, including, for example, a vest, hard hat, or helmet. According to certain embodiments, the detection of the detection device 232 via the captured information, or detection of the detection device 232 within a certain location/distance relative to the work vehicle 100, may suffice for the controller 202 to determine a detection of a detected object. Alternatively, according to other embodiments, the controller 202 can utilize such detection of the detection device 232 and an identification of additional information from captured information from another sensor system of the object detection system to determine a detection of a detected object. For example, the controller 202 may identify the detection of a detected object based on at least a combination of information from a first sensor system indicating the detection of a detection device 232 and information from a second sensor system indicating the presence of a preidentified or preselected motion or action, such as, for example, a waving of an arm, at or around the location or general vicinity of the detection device 232.

In response to the controller 202 determining a detection of one or more detected objects, at block 504 the controller 202 can generate one or more signals that facilitate an adjustment in the operation of one or more components, systems, or output devices 118 (collectively generally referred to herein as sound emission device), as well as any combination thereof, in a manner that can reduce a sound level emitted from such a sound emission device, and thereby reduce the sound level within the interior area 110 of the operator cab 108. Which operation is adjusted by the signals generated by the controller 202, and the extent of such an adjustment in associated the sound level being emitted, generated, or otherwise provided by such a sound emission device, can be based on one or more criteria, including, but not limited to, default settings, operator preferences, type of detected object, or proximity of detected object to work vehicle 100, as well as combinations thereof, among other criteria. For example, as previously discussed, in response to detection by the controller 202 of a detected object from at least the captured information provided by the object detection sensor system 218, the controller 202 can generate one or more signals to facilitate a reduction in the operating speed of either or both the engine fan 238 and the blower 136. Such a change in the speed of the blower 136 can at least reduce the speed, and thus the associated noise, of operation of the blower 136 and the air that is impelled from the blower 136 and through one or more vents 132 in the operator cab 108. Additionally, or alternatively, such an adjustment(s) by the controller 202 can involve reducing the volume at which sound is emitted from one or more of the speakers 124, including, for example, emitted in connection with operation of a radio 212, 212a.

According to the illustrated embodiment, at block 506, after a reduction in the sound level in the interior area 110 of the operator cab 108, the controller 202 can determine whether and operator of the work vehicle 100 has acknowledged the change in sound level in the operator cab 108. The operator can acknowledge this change, and more specifically, the reduction of the sound level being heard in the operator cab 108 in a variety of different manners. For example, according to certain embodiments, in connection with the controller 202 adjusting, at least temporarily, an operation of a sound emission device, the controller 202 can also generate a signal that can facilitate a display 120 of a selectable acknowledgement icon on an input / output device 116, 118 in the form of a touch screen monitor in the operator cab 108. According to such an embodiment, operator engagement with the acknowledgement icon can generate a signal that is communicated to the controller 202 to indicate that the operator is aware, or otherwise has acknowledged, the reduction in the sound level within the operator cab 108. However, operator acknowledgement of the reduction in sound level within the operator cab 108 can be provided in a variety of other, or additional, manners. For example, according to certain embodiments, the object intelligence detection system 200 can include a camera within the interior area 110 of the operator cab 108 that can detect a motion by the operator such as, for example, a hand gesture, that can provide an acknowledgement from the operator of the reduction in sound level. Further, the acknowledgement from the operator can be provided by operator engagement with one or more input devices 116, including, for example, one or more buttons or switches of the work vehicle 100. Additionally, the acknowledgement by the operator can be in the form of an action taken by the operator, including, for example, utilizing the two-way radio 212a, slowing a speed of the work vehicle 100, ceasing an operation of the work vehicle, or changing a heading of the work vehicle 100, among other actions.

In the event the controller 202 determines at block 506 that the controller 202 has received a signal indicating the operator acknowledged the reduction in sound level, then, at block 508, the controller 202 can generate a signal to return each of the operations that were adjusted at block 504 to a level that increases the sound levels generated or emitted by those operations. For example, according to certain embodiments, at block 508, one or more, if not all, of the operations that were adjusted at block 504 can be restored to operating at levels that generates or emits sounds at, or around, the same levels that those operations emitted prior to being adjusted at block 504. Whether the controller 202 does, or does not, generate a signal to restore one or more such operations to levels that produce sound at levels similar to that generated before the adjustment that occurred at block 504 can be based on a variety of considerations. For example, in certain situations, the speed of the engine fan 238 can, at block 508, at least temporarily be increased to a level that is greater than the speed at which the engine fan 238 was operating before the adjustment at block 504 so as to compensate for an increase in engine temperature that may be attributed to the duration of time the engine fan 238 operated at a reduced speed in response to the signal generated at block 504. Similarly, the blower 136 may, at least temporarily, operate at a speed at block 508 that is higher than the speed at which the blower 136 was operating prior to block 504 so as to compensate for increases, if any, in the temperature within the operator cab 108 that occurred as a result of the blower 136 speed being adjustment at block 504. Conversely, in certain situations, at block 510, one or more of the operations that were adjusted at block 504 can be increased, but not increased to the same level at which the operations were operating prior to block 504. However, one or more other operations, such as, for example, the emitting of sound from the speaker 124 can, at block 508, be restored to the same or similar volume level at which the speaker 124 was emitting sound before being adjusted at block 504, or otherwise adjusted to a default setting.

In the event the controller 202 determines at block 506 that the controller 202 has not received a signal indicating that the operator has acknowledged the reduction in sound level, then, at block 510, the controller 202 can determine whether a threshold time limit has expired. For example, in connection with the operational adjustments implemented at block 504, the controller 202 can also generate a signal to initiate a timer that can be utilized to measure the length of time that the operational adjustments enacted at block 504 have been implemented. Accordingly, at block 510, in the absence of receipt of an acknowledgment signal from the operator, upon the timer reaching a threshold limit, the method 500 can proceed to block 508, wherein the operation levels, and associated sound levels, can be increased or restored in a manner similar to that discussed above with respect to block 508.

Additionally, or alternatively, following detection of the detected object at block 502, the object intelligence detection system 200 can continue to utilize information from the object detection sensor system 218 to determine whether a previously detected object is still being detected by the object detection sensor system 218. For example, in certain situations, the work vehicle 100 or detected object can move to a position at which the previously detected object is no longer being detected by the controller 202 from the captured information provided by the object detection sensor system 218, or is not at a certain, predetermined distance relative to the work vehicle 100 to no longer be deemed a detected object. In such a situation, with the detected object no longer being detected in the captured information, or no longer considered a detected object, the method can proceed to block 508, wherein the controller 202 generate a signal to restore the operations, and associated sound levels, that were adjusted at block 504, as previously discussed.

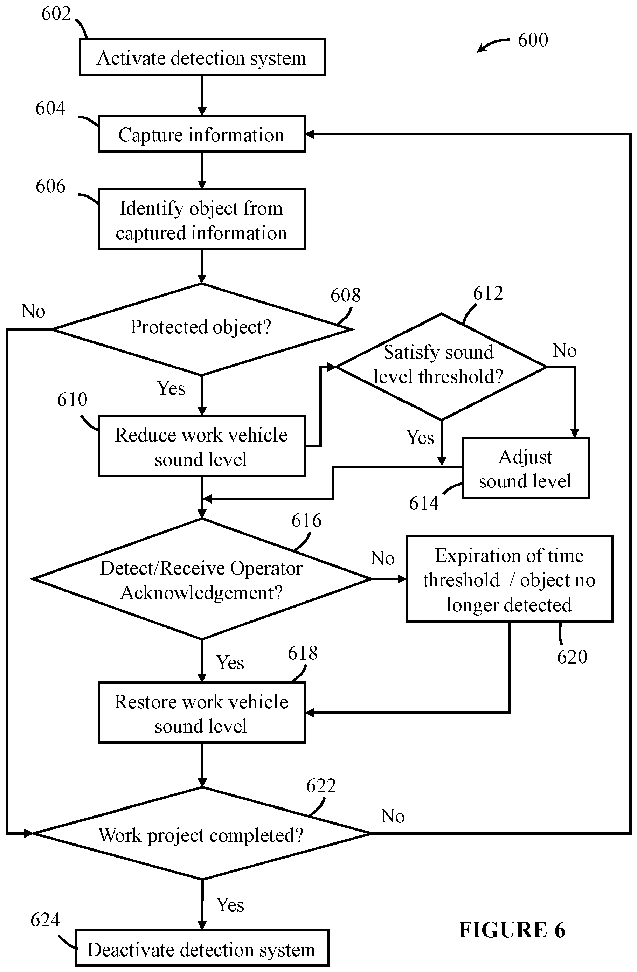

Figure 6 illustrates a simplified flow diagram of an exemplary method 600 for operation of an object intelligence detection system 200 to selectively adjust sound levels within an operator cab 108. The method 600 is described below in the context of being carried out by the illustrated exemplary object intelligence detection system 200. However, it should be appreciated that the method 600 can likewise be carried out by any of the other described implementations, as well as variations thereof. Further, the method 600 corresponds to, or is otherwise associated with, performance of the blocks described below in the illustrative sequence of Figure 6. It should be appreciated, however, that the method 600 can be performed in one or more sequences different from the illustrative sequence. Additionally, one or more of the blocks mentioned below may not be performed, and the method 600 can include steps or processes other than those discussed below.

At block 602, the object intelligence detection system 200 can be activated. For example, the object intelligence detection system 200 can be automatically activated by the controller 202 in response to activation or movement of the work vehicle 100, among other activation triggers. Additionally, or alternatively, the object intelligence detection system 200 can be selectively activated by the operator, such as, for example, by the operator utilizing the input device 116 to communicate a command to the controller 202 to activate the object intelligence detection system 200. With the object intelligence detection system 200 activated, at block 604 one or more sensor systems of the object detection sensor system 218 can capture information of or from, one or more areas around the work vehicle 100. Moreover, at block 604, the object detection sensor system 218 can be utilized to capture information that the controller 202 can utilize to identify the presence of a detected object. Such capturing of information, as well as the use of such captured information by the controller 202 to detect one or more detected objects at block 606, can be similar to that discussed above with respect to block 502 of the method 500 depicted in Figure 5.

At block 608, the controller 202 can determine whether the detected object, as identified at block 606, is the type of detected object, or falls within a group of detected objects, that is/are to be protected by operation of the object intelligence detection system 200. For example, according to certain embodiments certain objects can be identified, including, predetermined, to be a type of detected object that is to be identified by use of the object intelligence detection system 200 via at least a reduction in sound level in the operator cab 108 as a protected object. Conversely, according to other embodiments, certain detected objects can be identified, including, predetermined, to not be the type of object that is to be identified by the object intelligence detection system 200 as a protected object, also referred to herein as having a protected status. For example, in certain instances, the work vehicle 100 can be operated at a location that is relatively close to a fence or post. In such situations, although the controller 202 may identify one or more of the posts or fence as detected objects, the controller 202 may not identify such detected objects as protected detected objects or having a protected status. Similarly, a worker identified by the controller 202 may, in some embodiments, may be identified at block 606 as a detected object but not as a detected object that is protected at block 608 unless the identified worked is further identified as performing a particular, predetermined, movement or action, including, for example, a waving of an arm(s) of the worker or a predetermined hand or facial gesture, among other movements or gestures.

If the controller 202 determines at block 608 that the detected object is a protected object, then at block 610 the controller 202 can generate a signal to adjust the operation of one or more sound emission devices, and moreover, adjust such operation so as to reduce the sound level generated or emitted by operation of the sound emission device(s). Such adjustments in the operation of one or more sound emission devices and the associated level of sound generated or emitted by the operation of the sound emission device can be similar to that discussed above with respect to block 504 of the method 500 depicted in Figure 5.

The method 600 shown in Figure 6 includes a feedback loop that can be utilized to determine whether the adjustments made at block 610 are to be altered or modified. For example, following implementation of the adjustments at block 610, the sound level within the operator cab 108 can be detected by the controller 202 from information provided by the sound sensor 234. With information regarding the adjusted sound level within the operator cab 108, the controller 202 can determine at block 612 whether the sound level is at or below a threshold sound level. If the controller 202 determines at block 612 that the sound level being detected by the sound sensor 234 does not satisfy the sound level threshold, then at block 614, the controller 202 can generate a signal to either or both further adjust one or more of the operations that were adjusted at block 610 in an attempt to further reduce the noise level within the operator cab 108, or adjust the operation of additional, or other, sound emission devices. For example, according to certain embodiments, at block 610, the controller 202 can generate a signal to reduce the speed of the blower 136 in an attempt to satisfy the sound threshold level within the operator cab 108. However, if the controller 202 determines at block 612 that the adjustments made to the operation of the blower 136 do not reduce the sound level to a volume that satisfies the sound level threshold, then at block 614 the controller 202 can generate a signal to further reduce the speed of the blower 136. Additionally, or alternatively, in such a situation, the controller 202 can also issue a signal to reduce the speed of the engine fan 238, or the volume of sound, if any, emitted from one or more speakers 124. Additionally, after making adjustments at block 614, the controller 202 can again utilize information from the sound sensor 234 to determine whether the sound level within the operator cab 108 is satisfying the predetermined sound threshold, or, alternatively, if additional adjustments to reduce the sound level within the operator cab 108 are to be implemented at block 614.

At block 616, similar to block 506 of the method 500 depicted in Figure 5, the controller 202 can determine whether the operator has acknowledged the adjustment in either or both the operation of the sound emission device or the associated reduction in sound level within the operator cab 108. If the controller 202 determines the operator has acknowledged the adjustment in the operation of the sound emission device or associated reduction in sound level within the operator cab 108, then, similar to block 508 of the method 500 shown in Figure 5, at block 618 the controller 202 can restore or increase the operation of the sound emission device or associated sound level within the operator cab 108. If, however, the controller 202 determines at block 616 that the operator has not acknowledged the adjustment and operation of the sound emission device or change in the sound level and the operator cab 108, then, similar to block 510 of Figure 5, the controller 202 can determine at block 620 whether the predetermined time threshold has expired. Additionally or alternatively, similar to block 510, at block 616 the controller 202 can determine whether the detected, and protected, object is no longer detected in captured information provided by the object detection sensor system 218, or is now at a distance from the work vehicle 100 to no longer be deemed a detected object, before restoring or increasing the operation of the sound emission device, or associated sound level, at block 618.

At block 622, the controller 202 can determine whether the work vehicle 100 is still being utilized in connection with performing a work operation or task, and thus whether to proceed with deactivation of the object intelligence detection system 200 at block 624. If the task is determined by the controller 202 at block 622 to not yet be completed, then the method 600 can return to block 604, where the controller 202 can continue to analyze captured information provided by the object detection sensor system 218 in connection with detecting a detected object, and an associated determination as to whether the detected object is a protected object, as previously discussed with respect to blocks 604 and 606, respectively.

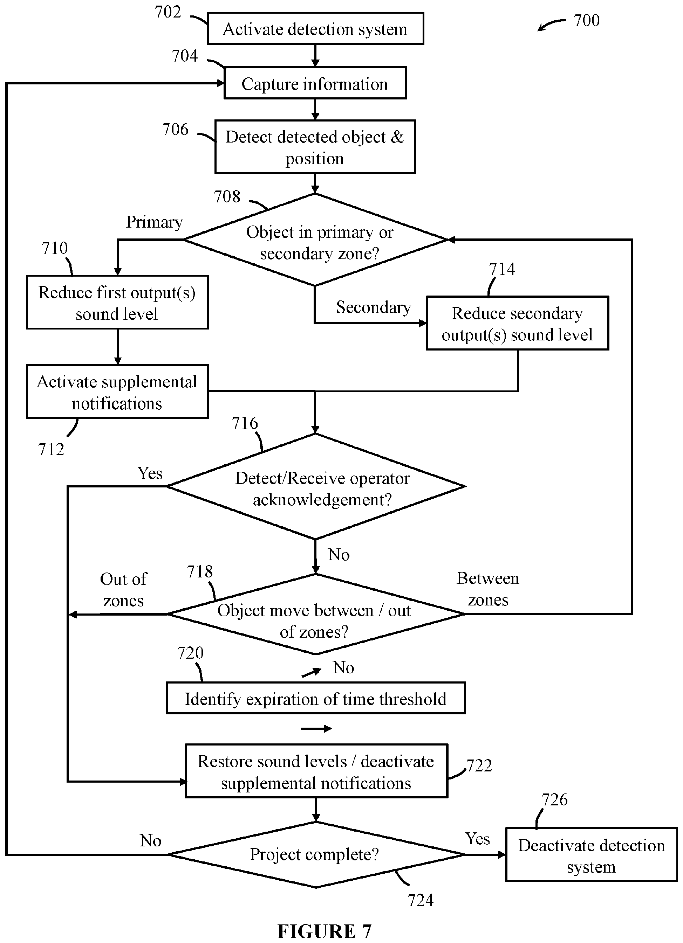

Figure 7 illustrates a simplified flow diagram of an exemplary method 700 for operation of an object intelligence detection system 200 to selectively adjust sound levels within an operator cab 108. The method 700 is described below in the context of being carried out by the illustrated exemplary object intelligence detection system 200. However, it should be appreciated that the method 700 can likewise be carried out by any of the other described implementations, as well as variations thereof. Further, the method 700 corresponds to, or is otherwise associated with, performance of the blocks described below in the illustrative sequence of Figure 7. It should be appreciated, however, that the method 700 can be performed in one or more sequences different from the illustrative sequence. Additionally, one or more of the blocks mentioned below may not be performed, and the method 700 can include steps or processes other than those discussed below.

Similar to block 602 of the method 600 illustrated in Figure 6, at block 702 the object intelligence detection system 200 can be activated, and the object detection sensor system 218 can capture information at block 704. The captured information attained at block 704 can be attained in a manner that is at least similar to that discussed above with respect to block 502 and block 604 of previously discussed methods 500 and 600, respectively. At block 706, the controller 202 can utilize information provided by, or derived from, the captured information to detect one or more detected objects from the captured information. According to certain embodiments, such detection of the detected object(s) can be similar to the identification of the detected object discussed above with respect to blocks 502 and 606 of the previously discussed methods 500, 600. Optionally, according to certain embodiments, the detection of the detected object can also include determining whether the detected object qualifies as a protected detected object, as also discussed above with respect to block 608 of the method 600 discussed above with respect to Figure 6.

Additionally, at block 706, the captured information can indicate to the controller 202, or be used by the controller 202 to identify, positional information for at least the detected object, including, for example, a position of the detected object relative to a least a portion of the work vehicle 100. For example, the captured information can provide positional information in the form of one or more of the distance between the detected object and the work vehicle 100, a relative location of the detected object relative to the work vehicle 100, and a direction of travel, if any, of the detected object or work vehicle 100. Further, referencing Figure 2, using the positional information, the controller 202 can be configured to determine whether the detected object is within one or more zones 220, 222 or designated areas about the work vehicle 100, including, for example, the above-mentioned primary and secondary zones 220, 222. Additionally, the positional information, among other information regarding the direction of travel of the work vehicle 100, can indicate whether the detected object is positioned along, or moving toward, a current path of travel of the work vehicle 100 such that there is a potential for collision between the detected object and the moving work vehicle 100.

Based at least in part on positional information regarding at least the detected object relative to the work vehicle 100, the controller 202 can determine whether to issue one or more signals to adjustment the operation of one or more sound emission devices, among other devices, of the work vehicle 100. Moreover, the controller 202 can utilize such positional information to determine the extent to adjust the operation of one or more sound emission devices, or to the degree the sound level is to be reduced within the operator cab 108. For example, the extent to which the controller 202 determines to either or both adjustment the operation of one or more sound emission devices or reduce the sound level within the operator cab 108, among other forms of alert or notification for the operator of the work vehicle 100, can be based, at least in part, on the imminency or risk of a potential collision between the work vehicle 100 and the detected object. For example, in the illustrated method 700, at block 708, the controller 202 can determine whether the detected object is in either the primary zone 220 or the secondary zone 222. While Figure 7 discusses a primary zone 220 and a secondary zone 222, the number of zones, position of the zones 220, 222, and shapes of the zones 220, 222, among other characteristics of the zones 220, 222, can vary for different embodiments.

If at block 708 the controller 202 determines from at least the positional information that the detected object is in the primary zone 220, then at block 710, the controller 202 can generate one or more signals to adjust the operation of one or more sound emission devices to levels that can attain a first threshold sound level within the operator cab 108. According to the illustrated embodiment, the first threshold sound level can be a volume of sound that is lower than a second threshold sound level that is associated with the detected object being in the secondary zone 222, as discussed below. Such differences in the first and second threshold sound levels for the primary zone 220 and the secondary zone 222, respectively, can be attributed to the closer proximity of the detected object to the work vehicle 100, and associated potential greater risk for collision, when the detected object is in the primary zone 220.

Additionally, in connection with the determination at block 708 that the detected object is in the primary zone 220, at block 712 the controller 202 can issue one or more signals to activate supplemental alerts or notifications to the operator. According to the illustrated embodiment, the supplemental notification(s) can be a further attempt to attain, or redirect, the attention of the operator via means in addition to the reduction in sound level within the operator cab 108. For example, according to certain embodiments, these supplemental notifications can comprise operation, or at least a temporary adjustment in the operation, of one or more of the illumination devices 126. For example, according to certain embodiments, the illumination device 126 can comprise one or more light emitting diodes (LEDs) positioned around a viewing area through which the operator can see outside of the operator cab 108. According to such an embodiment, the supplemental alert notification at block 712 can comprise one or more of illuminating such LEDs, changing the color the light emitted by the LEDs, or changing an illumination pattern of the LEDs, among other manners of operating the LEDs. Additionally, or alternatively, such supplemental notifications at block 712 can comprise operating, or adjusting the operation, of other illumination devices 126. These supplemental notification at block 7/12 can also comprise, according to certain embodiments, operation of the haptic feedback device 122 including, for example, a feedback device positioned on or in the seat on which the operator is seated in the operator cab 108m or of the steering wheel 128, among other haptic feedback devices 122. Further, the supplemental notification at block 712 can comprise generating an alert signal for display on the display 120.

Returning to block 708, if the controller 202 determines at block 708 that the detected object is in the secondary zone 222, then at block 714 the controller 202 can generate a signal to either or adjust the operation of one or more sound emission devices or reduce the sound level within the operator cab 108 to the previously discussed second threshold sound level.

According to certain embodiments, if the controller 202 determines that block 708 that the detected object is not in one of the primary zone 220 or the secondary zone 222, among other designated zones, then the controller 202 may opt to not make adjustments in the operation of any sound emission devices or to reduce the sound level within the operator cab 108. In such a situation, the method 700 could return to block 704, where the controller 202 can continue to analyze captured information that is obtained by the object detection sensor system 218.

The method 700 can also include a feedback system similar to that discussed above with respect to at least blocks 612 and 614 of the method 600 illustrated in Figure 6. Accordingly, the controller 202 can, in association with the method 700, utilize information from the sound sensor 234 to determine whether the adjustments facilitated by the controller 202 at blocks 710 or 714 have resulted in the sound level within the operator cab 108 satisfying the corresponding first or second threshold sound levels, as well as determine whether to issue a signal to make further, or additional, adjustments to sound emission devices so as to attain the corresponding first or second threshold sound level.

At block 716, the controller 202 can determine whether the operator has provided an acknowledgement to the adjustment in sound level and notification(s) made at block 710 and block 712, respectively, or the adjustment in sound level at block 714. Such a determination by the controller 202 of whether an acknowledgment has been received or detected from the operator can be similar to above-discussed block 506 of the method 500 depicted in Figure 5.

If the controller 202 determines at block 716 that an operator acknowledgement was not detected or received, then at block 718 the controller 202 can determine whether the detected object has moved out of, or between, the primary zone 220 or secondary zone 222. For example, at block 718, the controller 202 can utilize captured information obtained by the object detection system since the prior zone determination at block 708 to identify whether the detected object has moved between, or out of, either or both the primary and secondary zones 220, 222. If the controller 202 determines that the detected object has changed from being in the primary zone 220 to the secondary zone 222, or vice versa, then the method 700 can return to block 708 wherein the controller 202 can identify which zone the detected object is currently located. If, however the controller 202 determines that block 718 that the detected object is no longer in either the primary zone 220 or the secondary zone 222, or an operator acknowledgement has been detected or received, the method 700 can proceed to block 722, wherein operation of the sound emission devices can be restored to the levels prior to adjustment at either block 710 or 714, or otherwise adjusted above the levels that resulted from the adjustment at block 710 or 714. Additionally, at block 722, the supplemental notifications activated at block 712, if any, can be deactivated.

If however, the controller 202 determines at block 716 that the operator has not acknowledged the adjustment of the operation of the sound emission device or change in the sound level and the operator cab 108, and the detected object has not moved out from, or between, the primary and secondary zones 220, 222, then, similar to block 510 of Figure 5, the controller 202 can determine at block 720 when the predetermined time threshold has expired. In such a situation, upon the expiration of the predetermined time threshold, the method 700 can proceed to block 722, wherein the controller 202 can issue a signal to restore or increase the operation of the sound emission device, or associated sound level, and deactivate the supplemental notification, if any. The controller 202 can then determine, similar to block 622, whether the work task is completed at block 724, and if completed, deactivate the object intelligence detection system 200 at block 726. Otherwise, if the work task is not yet completed, then the method 700 can resume at block 704, where in the object intelligence detection system 200 can continue to monitor for detected objects and make corresponding adjustments to either or both the operation of the sound emission devices or sound levels within the operator cab 108.

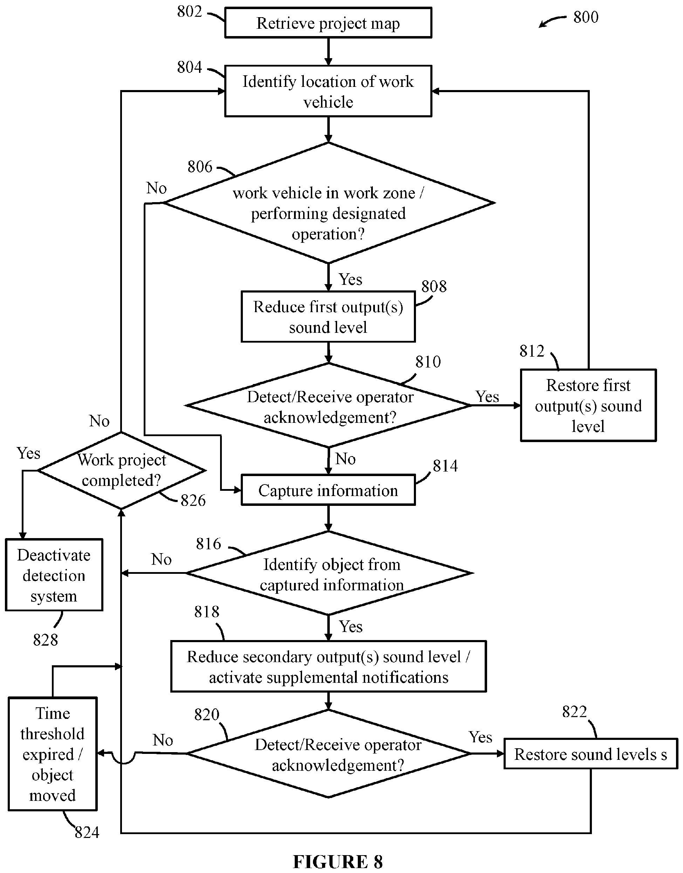

Figure 8 illustrates a simplified flow diagram of an exemplary method 800 for operation of an object intelligence detection system 200 to selectively adjust sound levels within an operator cab 108. The method 800 is described below in the context of being carried out by the illustrated exemplary object intelligence detection system 200. However, it should be appreciated that the method 800 can likewise be carried out by any of the other described implementations, as well as variations thereof. Further, the method 800 corresponds to, or is otherwise associated with, performance of the blocks described below in the illustrative sequence of Figure 8. It should be appreciated, however, that the method 800 can be performed in one or more sequences different from the illustrative sequence. Additionally, one or more of the blocks mentioned below may not be performed, and the method 800 can include steps or processes other than those discussed below.

At block 802, to the extent not already stored at the work vehicle 100, including, by the memory device 206, the communication unit 210 can be utilized to retrieve a project map from the secondary device 214. The project map can provide an indication of locations at which the work vehicle 100, among other work vehicles, is/are to perform operations or tasks, as well as locations of obstacles or structures that the work vehicle 100 is to avoid contacting, including, for example, fence posts, fences, and buildings, among other structures and items. Additionally, the work zone information can include, or be used to determine, a type of task that the work vehicle 100 is to perform. An identification of the type of task to be performed by the work vehicle 100 in the work zone can provide at least an indication of whether the work vehicle 100 is anticipated to in be in relatively close proximity to other vehicles or workers.

At block 804, the location system 216 can be utilized to identify a location of the work vehicle 100. Moreover, information provided by the location system 216 can be utilized by the controller 202 to determine a location of the work vehicle 100 relative to information provided by the project map, including one or more work zones or other objects. Thus, using the information provided by both the project map and the location system 216, at block 806, the controller 202 can determine whether the work vehicle 100 is within a work zone or performing a designated operation that may warrant limiting noises, or associated possible distractions associated with certain types of noises, within the operator cab 108.

Additionally, or alternatively, rather than utilizing a project map and location of the work vehicle 100, at block 806 the controller 202 can identify the type of task being performed by the work vehicle 100. According to certain embodiments, certain types of tasks, including task in which the implement 102 is actively being utilized to perform a work operation, can be predetermined, or designated, as a type of task in which at least certain sounds that can be heard in the operator cab 108 are to have a reduction in generated or emitted volume. A variety of different types of tasks can be predetermined to qualify as a designated task. Further, the type of task that is to be identified as a designated task can be set by default, including, for example, via factory settings, or, additionally or alternatively, based on an operator preference. The type of tasks that may be identified as designated tasks can depend on the type of work vehicle 100 or the type of implement 102 that is coupled to the work vehicle 100. For example, according to certain embodiments, a designated task for a work vehicle 100 coupled to an implement 102 in the form of a trencher can comprise a trenching operation. Similarly, with respect to work vehicle 100 coupled to an implement 102 in the form of a dozer blade, the designated operation can be performance of a grading operation. With respect to work vehicles 100 coupled to an implement 102 in the form of a bucket or grapple, the designated operation can comprise any one, or combination of, a raised or lowered position of the bucket or grapple, or whether the bucket or grapple is loaded or engaged with a material, including soil, rock, or agricultural materials, among other materials.

According to certain embodiments, whether the work vehicle 100 is engaged in a designated operation can be determined in a variety of different manners, including, but not limited to information provided to the controller 202 for one or more subsystems of the work vehicle 100, sensors, or information provided by the neural network 246. For example, the neural network 246 can be trained to identify, based on information from either or both various systems or sensors of the work vehicle 100, including, but not limited to, positional and operational information, the particular type of operation being performed by the work vehicle 100 or implement 102. Additionally, according to certain embodiments, the neural network 246 can further be trained to identify, based on information from various systems or sensors of the work vehicle 100 and information provided by one or more project maps to identify whether the work vehicle 100 or implement 102 is engaged in a particular type of operation, as well as whether that identified operation has been identified as a designated operation.

If the controller 202 determines at block 806 that the work vehicle 100 is not in the work zone, or, additionally or alternatively, the work vehicle 100 is not being used in connection with performing a designated task, then 800 can proceed to below-discussed block 814. However, if the controller 202 determines at block 806 that the work vehicle 100 is in a work zone or performing a designated task, then at block 808 the controller 202 can generate a signal to reduce a sound level being emitted or generated by at least one first sound emission device. For example, based on either or both the position of the work vehicle 100 or the task being performed by use of the work vehicle 100, the controller 202 can at block 808 generate a signal to reduce the volume outputted by one or more speakers 124 within the operator cab 108. Such an adjustment in the operation of at least one first sound emission device can provide a means for at least attempting to gain, or redirect, the attention, of the operator in view of the environment, including potential objects or workers, around the work vehicle 100, or based on the nature, including potentially hazardous nature, of the designated operation that is, or is to be, performed using at least the work vehicle 100.

Additionally, the method 800 can, similar to blocks 612 and 612 for the method 600 illustrated in Figure 6, utilize information from the sound sensor 234 to determine whether to issue another signal to modify the adjustment(s) in the operation of the first sound emission device(s), or if an adjustment(s) of an addition or other first sound emission device(s), is/are to be made to reduce the sound level within the operator cab 108 to a level that attains a threshold sound level. Thus, if the controller 202 determines that, based on such feedback information, the sound level within the operator cab 108 has not yet attained the threshold sound level, the controller 202 can generate a signal to make further adjustments, or additions to, the first sound admission device(s) so as to satisfy the sound threshold level.

At block 810, similar to block 506 of the method 500 illustrated in Figure 5, after a reduction in the sound level generated or emitted by the first sound emission device, the controller 202 can determine whether the operator of the work vehicle 100 has acknowledged the change in sound volume in the operator cab 108. If the controller 202 has received or detected an acknowledgment from the operator, the sound level generated or transmitted by the first sound emission device can be restored at block 814, or otherwise increased to a level that is greater than the sound level that was emitted or transmitted by the first sound emission device after the adjustment at block 808.

If, however, the controller 202 determines at block 810 that the controller 202 has not received or detected an indication of the operator acknowledging the reduction in the sound level within the operator cab 108, then at block 816 the controller 202 can utilize information captured by the object detection sensor system 218 at block 814 to determine if a detected object is detected in, or from, the captured information. Such capturing of captured information at block 814, and detection of the detected object from the captured information at block 816 can be similar to at least previously discussed blocks 502, 604, and 704 of the methods 500, 600, 700 illustrated in Figures 5-7, respectively. Further, such capturing of information and detection of a detected object can be in parallel to, dependent, or independent of the adjustments to the first sound emission devices made at block 808 and associated work zone / designated operation determinations at block 806.

If the controller 202 determines at block 816 that a detected object has been identified from the captured information, then at block 818 the controller 202 can issue a signal to reduce the sound level outputted including, generated or transmitted, from the operation of at least one second sound emission device. The second sound emission device can be an output device 118 or system of the work vehicle 100 that is different than the first sound emission device. For example, according to certain embodiments, the first sound emission device can include at least one of the blower 136 or the speaker 124, while the second sound emission device can comprise the engine fan 238, or vice versa. Further, the reduction in sound level from the second sound emission device can further reduce the sound level within the operator cab 108 below a level that was attained from the reduction in sound level of the first sound emission device at block 808. Thus, the reduction of sound level in the operator cab 108 associated with block 818 can be a further attempt to gain, or redirect, the attention of the operator to the environment outside of the work vehicle 100. Additionally, similar to blocks 612 and 612 for the method 600 illustrated in Figure 6, the controller 202 can utilize information from the sound sensor 234 as feedback information to determine whether to modify the adjustments made at block 818 and/or adjust additional, or other, second sound emission devices.

If the controller 202 determines at block 820 that the controller 202 has received or detected an acknowledgement from the operator of at least the reduction in sound level in the operator cab 108, then the controller 202 at block 822 can restored the first and second sound emission devices to levels that are at least higher than the sound levels to which the first and second sound emission devices were lowered to at blocks 808 and 818, respectively. Again, such an adjustment at block 822 can comprise operating the first and second sound emission devices at sound levels that are similar, if not the same, as the sound levels being outputted by those devices prior to the associated adjustments at blocks 808 and 818. However, if the controller 202 determines at block 820 that an operator acknowledgement has not been received or detected, then similar to at least block 620 of the method 600 shown in Figure 6, the controller 202 can determine whether the time threshold has expired, or if the detected object is no longer being detected in subsequently obtained captured information.

The method 800 can then proceed to block 826, where the controller 202 can determine whether the object intelligence detection system 200 is to be deactivated at block 828. Moreover, at block 826, the controller 202 can determine with the object intelligence detection system 200 is to continue monitoring whether the work vehicle 100 is in a work zone, performing a designated task, or whether the captured information provides an indication of a detected object, in which event the method can again return to block 804.

## Claims

1. An object intelligence detection system (200) for providing a notification of a detected object to an operator of a work vehicle (100), the object intelligence detection system (200) comprising:
at least one sensor (224, 226) configured to provide a captured information indicative of a presence of the detected object at a location outside of the work vehicle (100);
a sound emission device that generates or emits a sound that is detectable by the operator in an operator cab (108) associated with the work vehicle (100);
at least one processor (204); and
a memory device (206) coupled to the at least one processor (204), the memory device (206) including instructions that when executed by the at least one processor (204) cause the at least one processor (204) to:
detect, from at least the captured information, the presence of the detected object; and
generate, in response to at least the detection of the presence of the detected object, a signal to adjust an operation of the sound emission device in a manner that reduces a sound level within the operator cab (108) to a reduced sound level;
wherein the signal adjusts the operation of at least one of an engine fan (238) of a prime mover (236) of the work vehicle (100) and a blower (136) of a heating and air condition system (134) of the work vehicle (100).

2. The object intelligence detection system (200) of claim 1, wherein the memory device (206) further includes instructions that when executed by the at least one processor (204) cause the at least one processor (204) to generate, in response to a receipt of an acknowledgement signal indicative of an acknowledgement by the operator of a reduction in the sound level, a signal to increase the sound level within the operator cab (108) above the reduced sound level.

3. The object intelligence detection system (200) of claim 1, wherein the memory device (206) further includes instructions that when executed by the at least one processor (204) cause the at least one processor (204) to:
determine a location of the detected object; and
determine the reduced sound level, the reduced sound level being variable based at least in part on the determined location of the detected object.

4. The object intelligence detection system (200) of claim 1, wherein the memory device (206) further includes instructions that when executed by the at least one processor (204) cause the at least one processor (204) to determine the detected object has a protected status, and wherein the generation of the signal to adjust the operation of the sound emission device is further based at least in part on the detected object having the protected status.

5. The object intelligence detection system (200) of claim 1, wherein the detection of the presence of the detected object can comprise a detection of a gesture made by the detected object.

6. The object intelligence detection system (200) of claim 1, wherein the detection of the presence of the detected object can comprise a movement by the detected object.

7. The object intelligence detection system (200) of claim 1, wherein the memory device (206) further includes instructions that when executed by the at least one processor (204) cause the at least one processor (204) to determine, based on a feedback information that indicates an actual sound level within the operator cab (108), a signal to at least one of (a) readjust the operation of the sound emission device to further reduce the actual sound level within the operator cab (108), and (b) adjust the operation of an additional sound emission device to further reduce the actual sound level within the operator cab (108).

8. The object intelligence detection system (200) of claim 1, wherein the memory device (206) further includes instructions that when executed by the at least one processor (204) cause the at least one processor (204) to:
determine a location of the detected object is within a predetermined distance of the work vehicle (100); and
generate, in response to the determination the detected object is within the predetermined distance, a supplementary signal to activate an output device (118) of the work vehicle (100), the output device comprising at least one of an illumination device (126) and a haptic feedback device (122).

9. The object intelligence detection system (200) of claim 1, wherein the at least one sensor (224, 226) is configured to capture information in a form of at least a detection signal emitted from a detected device outside of the work vehicle (100).

10. The object intelligence detection system (200) of claim 1, wherein the at least one sensor (224, 226) comprises a first sensor system (224, 226) configured to sense a first captured information indicative of a task being performed by the work vehicle (100);
wherein the object intelligence detection system (200) further includes a first sound emission device, that, by an operation of the first sound emission device, generates or emits a first sound that is detectable by an operator within the operator cab (108); and
wherein the memory device (206) further includes instructions that when executed by the at least one processor (204) cause the at least one processor (204) to:
identify, from at least the first captured information, the task being performed by work vehicle (100);
determine the task, as identified, qualifies for a first adjustment of the sound level within the operator cab (108); and
generate, in response to the determination the task qualifies for the adjustment of the sound level, a first signal to adjust the operation of the first sound emission device in a manner that reduces the sound level to a first reduced sound level.

11. The object intelligence detection system (200) of claim 10, further comprising:
a second senor system (226, 228) configured to sense a second captured information; and
a second sound emission device configured for an operation in a manner that generates or emits a second sound that is detectable by the operator in the operator cab (108),
wherein the memory device (206) further includes instructions that when executed by the at least one processor (204) cause the at least one processor (204) to:
detect, from at least the second captured information, a detected object; and
generate, in response to at least the detection of the detected object, a second signal to adjust the operation of the second sound emission device in a manner that reduces the first reduced sound level within the operator cab (108) to a second reduced sound level.

12. The object intelligence detection system (200) of claim 10, further comprising:
a location system (216) configured to identify a location of the work vehicle (100); and
wherein the memory device (206) further includes instructions that when executed by the at least one processor (204) cause the at least one processor (204) to:
determine the location of the work vehicle (100) relative to a work zone location, the work zone location being identified by the processor (204) from a project map; and
generate, in response to the determination of the location of the work vehicle (100) relative to the work zone location, a first signal to adjust an operation of the first sound emission device in a manner that reduces the sound level to the first reduced sound level.

13. The object intelligence detection system (200) of claim 12, further comprising:
a second senor system configured to sense a second captured information; and
a second sound emission device configured for an operation in a manner that generates or emits a second sound that is detectable by the operator in the operator cab (108),
wherein the memory device (206) further includes instructions that when executed by the at least one processor (204) cause the at least one processor (204) to:
detect, from at least the second captured information, the presence of a detected object; and
generate, in response to at least the detection of the detected object, a second signal to adjust the operation of the second sound emission device in a manner that reduces the sound level within the operator cab (108) to a second reduced sound level, the second reduced sound level being different than the first reduced sound level.

## Patentansprüche

1. Objektintelligenzdetektionssystem (200) zum Bereitstellen einer Benachrichtigung über ein detektiertes Objekt an einen Bediener eines Arbeitsfahrzeugs (100), wobei das Objektintelligenzdetektionssystem (200) Folgendes umfasst:
mindestens einen Sensor (224, 226), der zum Bereitstellen von erfassten Informationen, die für eine Anwesenheit des detektierten Objekts an einem Standort außerhalb des Arbeitsfahrzeugs (100) bezeichnend sind, konfiguriert ist;
eine Schallemissionsvorrichtung, die einen Schall erzeugt oder abgibt, der von dem Bediener in einer mit dem Arbeitsfahrzeug (100) verbundenen Bedienerkabine (108) detektierbar ist;
mindestens einen Prozessor (204); und
eine Speichervorrichtung (206), die mit dem mindestens einen Prozessor (204) gekoppelt ist, wobei die Speichervorrichtung (206) Anweisungen beinhaltet, die bei Ausführung durch den mindestens einen Prozessor (204) den mindestens einen Prozessor (204) veranlassen zum:
Detektieren, anhand zumindest der erfassten Informationen, der Anwesenheit des detektierten Objekts; und
Erzeugen, als Reaktion auf mindestens die Detektion der Anwesenheit des detektierten Objekts, eines Signals zum Anpassen eines Betriebs der Schallemissionsvorrichtung auf eine Weise, die einen Schallpegel innerhalb der Bedienerkabine (108) auf einen reduzierten Schallpegel reduziert;
wobei das Signal den Betrieb von mindestens einem von einem Motorlüfter (238) einer Antriebsmaschine (236) des Arbeitsfahrzeugs (100) und einem Gebläse (136) einer Heizungs- und Klimaanlage (134) des Arbeitsfahrzeugs (100) anpasst.

2. Objektintelligenzdetektionssystem (200) nach Anspruch 1, wobei die Speichervorrichtung (206) ferner Anweisungen beinhaltet, die bei Ausführung durch den mindestens einen Prozessor (204) den mindestens einen Prozessor (204) zum Erzeugen, als Reaktion auf einen Empfang eines Bestätigungssignals, das für eine Bestätigung durch den Bediener einer Reduzierung des Schallpegels bezeichnend ist, eines Signals zum Erhöhen des Schallpegels innerhalb der Bedienerkabine (108) über den reduzierten Schallpegel veranlassen.

3. Objektintelligenzdetektionssystem (200) nach Anspruch 1, wobei die Speichervorrichtung (206) ferner Anweisungen beinhaltet, die bei Ausführung durch den mindestens einen Prozessor (204) den mindestens einen Prozessor (204) veranlassen zum:
Bestimmen eines Standorts des detektierten Objekts; und
Bestimmen des reduzierten Schallpegels, wobei der reduzierte Schallpegel zumindest teilweise auf Basis des bestimmten Standorts des detektierten Objekts veränderlich ist.

4. Objektintelligenzdetektionssystem (200) nach Anspruch 1, wobei die Speichervorrichtung (206) ferner Anweisungen beinhaltet, die bei Ausführung durch den mindestens einen Prozessor (204) den mindestens einen Prozessor (204) zum Bestimmen veranlassen, dass das detektierte Objekt einen geschützten Status aufweist, und wobei die Erzeugung des Signals zum Anpassen des Betriebs der Schallemissionsvorrichtung ferner zumindest teilweise darauf basiert, dass das detektierte Objekt den geschützten Status aufweist.

5. Objektintelligenzdetektionssystem (200) nach Anspruch 1, wobei die Detektion der Anwesenheit des detektierten Objekts eine Detektion einer von dem detektierten Objekt gemachten Geste umfassen kann.

6. Objektintelligenzdetektionssystem (200) nach Anspruch 1, wobei die Detektion der Anwesenheit des detektierten Objekts eine Bewegung durch das detektierte Objekt umfassen kann.

7. Objektintelligenzdetektionssystem (200) nach Anspruch 1, wobei die Speichervorrichtung (206) ferner Anweisungen beinhaltet, die bei Ausführung durch den mindestens einen Prozessor (204) den mindestens einen Prozessor (204) veranlassen zum Bestimmen, auf Basis von Feedback-Informationen, die einen tatsächlichen Schallpegel innerhalb der Bedienerkabine (108) anzeigen, eines Signals zum mindestens einen von (a) Neuanpassen des Betriebs der Schallemissionsvorrichtung, um den tatsächlichen Schallpegel innerhalb der Bedienerkabine (108) weiter zu reduzieren, und (b) Anpassen des Betriebs einer zusätzlichen Schallemissionsvorrichtung, um den tatsächlichen Schallpegel innerhalb der Bedienerkabine (108) weiter zu reduzieren.

8. Objektintelligenzdetektionssystem (200) nach Anspruch 1, wobei die Speichervorrichtung (206) ferner Anweisungen beinhaltet, die bei Ausführung durch den mindestens einen Prozessor (204) den mindestens einen Prozessor (204) veranlassen zum:
Bestimmen, dass sich ein Standort des detektierten Objekts innerhalb eines vorbestimmten Abstands von dem Arbeitsfahrzeug (100) befindet; und
Erzeugen, als Reaktion auf die Bestimmung, dass das detektierte Objekt sich innerhalb des vorbestimmten Abstands befindet, eines Zusatzsignals zum Aktivieren einer Ausgabevorrichtung (118) des Arbeitsfahrzeugs (100), wobei die Ausgabevorrichtung mindestens eines von einer Beleuchtungsvorrichtung (126) und einer Vorrichtung für haptisches Feedback (122) umfasst.

9. Objektintelligenzdetektionssystem (200) nach Anspruch 1, wobei der mindestens eine Sensor (224, 226) zum Erfassen von Informationen in einer Form von mindestens einem Detektionssignal, das von einer detektierten Vorrichtung außerhalb des Arbeitsfahrzeugs (100) abgegeben wird, konfiguriert ist.

10. Objektintelligenzdetektionssystem (200) nach Anspruch 1, wobei der mindestens eine Sensor (224, 226) ein erstes Sensorsystem (224, 226) umfasst, das zum Erkennen erster erfasster Informationen, die für eine vom Arbeitsfahrzeug (100) durchgeführte Aufgabe bezeichnend sind, konfiguriert ist;
wobei das Objektintelligenzdetektionssystem (200) ferner eine erste Schallemissionsvorrichtung beinhaltet, die durch einen Betrieb der ersten Schallemissionsvorrichtung einen ersten Schall erzeugt oder abgibt, der von dem Bediener innerhalb der Bedienerkabine (108) detektierbar ist; und
wobei die Speichervorrichtung (206) ferner Anweisungen beinhaltet, die bei Ausführung durch den mindestens einen Prozessor (204) den mindestens einen Prozessor (204) veranlassen zum:
Ermitteln, anhand zumindest der ersten erfassten Informationen, der vom Arbeitsfahrzeug (100) durchgeführten Aufgabe;
Bestimmen, dass die Aufgabe, wie ermittelt, für eine erste Anpassung des Schallpegels innerhalb der Bedienerkabine (108) infrage kommt; und
Erzeugen, als Reaktion auf die Bestimmung, dass die Aufgabe für die Anpassung des Schallpegels infrage kommt, eines ersten Signals zum Anpassen des Betriebs der ersten Schallemissionsvorrichtung auf eine Weise, die den Schallpegel auf einen ersten reduzierten Schallpegel reduziert.

11. Objektintelligenzdetektionssystem (200) nach Anspruch 10, ferner umfassend:
ein zweites Sensorsystem (226, 228), das zum Erkennen zweiter erfasster Informationen konfiguriert ist; und
eine zweite Schallemissionsvorrichtung, die für einen Betrieb auf eine Weise konfiguriert ist, die einen zweiten Schall erzeugt oder abgibt, der vom Bediener in der Bedienerkabine (108) detektierbar ist,
wobei die Speichervorrichtung (206) ferner Anweisungen beinhaltet, die bei Ausführung durch den mindestens einen Prozessor (204) den mindestens einen Prozessor (204) veranlassen zum:
Detektieren, anhand zumindest der zweiten erfassten Informationen, eines detektierten Objekts; und
Erzeugen, als Reaktion auf mindestens die Detektion des detektierten Objekts, eines zweiten Signals zum Anpassen des Betriebs der zweiten Schallemissionsvorrichtung auf eine Weise, die den ersten reduzierten Schallpegel innerhalb der Bedienerkabine (108) auf einen zweiten reduzierten Schallpegel reduziert.

12. Objektintelligenzdetektionssystem (200) nach Anspruch 10, ferner umfassend:
ein Ortungssystem (216), das zum Ermitteln eines Standorts des Arbeitsfahrzeugs (100) konfiguriert ist; und
wobei die Speichervorrichtung (206) ferner Anweisungen beinhaltet, die bei Ausführung durch den mindestens einen Prozessor (204) den mindestens einen Prozessor (204) veranlassen zum:
Bestimmen des Standorts des Arbeitsfahrzeugs (100) relativ zu einem Arbeitszonenort, wobei der Arbeitszonenort vom Prozessor (204) anhand einer Projektkarte ermittelt wird; und
Erzeugen, als Reaktion auf die Bestimmung des Standorts des Arbeitsfahrzeugs (100) relativ zum Arbeitszonenort, eines ersten Signals zum Anpassen eines Betriebs der ersten Schallemissionsvorrichtung auf eine Weise, die den Schallpegel auf den ersten reduzierten Schallpegel reduziert.

13. Objektintelligenzdetektionssystem (200) nach Anspruch 12, ferner umfassend:
ein zweites Sensorsystem, das zum Erkennen zweiter erfasster Informationen konfiguriert ist; und
eine zweite Schallemissionsvorrichtung, die für einen Betrieb auf eine Weise, die einen zweiten Schall erzeugt oder abgibt, der von dem Bediener in der Bedienerkabine (108) detektierbar ist, konfiguriert ist;
wobei die Speichervorrichtung (206) ferner Anweisungen beinhaltet, die bei Ausführung durch den mindestens einen Prozessor (204) den mindestens einen Prozessor (204) veranlassen zum:
Detektieren, anhand zumindest der zweiten erfassten Informationen, der Anwesenheit eines detektierten Objekts; und
Erzeugen, als Reaktion auf mindestens die Detektion des detektierten Objekts, eines zweiten Signals zum Anpassen des Betriebs der zweiten Schallemissionsvorrichtung auf eine Weise, die den Schallpegel innerhalb der Bedienerkabine (108) auf einen zweiten reduzierten Schallpegel reduziert, wobei der zweite reduzierte Schallpegel von dem ersten reduzierten Schallpegel verschieden ist.

## Revendications

1. Système (200) de détection d'intelligence d'objet pour fournir une notification d'un objet détecté à un opérateur d'un véhicule de travail (100), le système (200) de détection d'intelligence d'objet comprenant :
au moins un capteur (224, 226) configuré pour fournir une information capturée indicative d'une présence de l'objet détecté à un emplacement à l'extérieur du véhicule de travail (100) ;
un dispositif d'émission sonore qui génère ou émet un son qui est détectable par l'opérateur dans une cabine (108) d'opérateur associée au véhicule de travail (100) ;
au moins un processeur (204) ; et
un dispositif mémoire (206) couplé à l'au moins un processeur (204), le dispositif mémoire (206) incluant des instructions qui, lorsqu'elles sont mises en œuvre par l'au moins un processeur (204), amènent l'au moins un processeur (204) à :
détecter, à partir au moins de l'information capturée, la présence de l'objet détecté ; et
générer, en réponse à au moins la détection de la présence de l'objet détecté, un signal pour ajuster un fonctionnement du dispositif d'émission sonore d'une manière qui réduit un niveau sonore à l'intérieur de la cabine (108) d'opérateur à un niveau sonore réduit ;
dans lequel le signal ajuste le fonctionnement d'au moins l'un parmi un ventilateur (238) de moteur d'un moteur principal (236) du véhicule de travail (100) et une soufflante (136) d'un système de chauffage et de climatisation (134) du véhicule de travail (100).

2. Système (200) de détection d'intelligence d'objet selon la revendication 1, dans lequel le dispositif mémoire (206) inclut en outre des instructions qui, lorsqu'elles sont mises en œuvre par l'au moins un processeur (204), amènent l'au moins un processeur (204) à générer, en réponse à la réception d'un signal d'acquittement indiquant un acquittement par l'opérateur d'une réduction du niveau sonore, un signal pour augmenter le niveau sonore à l'intérieur de la cabine (108) d'opérateur au-dessus du niveau sonore réduit.

3. Système (200) de détection d'intelligence d'objet selon la revendication 1, dans lequel le dispositif mémoire (206) inclut en outre des instructions qui, lorsqu'elles sont mises en œuvre par l'au moins un processeur (204), amènent l'au moins un processeur (204) à :
déterminer un emplacement de l'objet détecté ; et
déterminer le niveau sonore réduit, le niveau sonore réduit étant variable sur la base au moins en partie de l'emplacement déterminé de l'objet détecté.

4. Système (200) de détection d'intelligence d'objet selon la revendication 1, dans lequel le dispositif mémoire (206) inclut en outre des instructions qui, lorsqu'elles sont mises en œuvre par l'au moins un processeur (204), amènent l'au moins un processeur (204) à déterminer que l'objet détecté présente un état protégé, et dans lequel la génération du signal pour ajuster le fonctionnement du dispositif d'émission sonore est en outre basée au moins en partie sur l'objet détecté présentant l'état protégé.

5. Système (200) de détection d'intelligence d'objet selon la revendication 1, dans lequel la détection de la présence de l'objet détecté peut comprendre une détection d'un geste effectué par l'objet détecté.

6. Système (200) de détection d'intelligence d'objet selon la revendication 1, dans lequel la détection de la présence de l'objet détecté peut comprendre un mouvement par l'objet détecté.

7. Système (200) de détection d'intelligence d'objet selon la revendication 1, dans lequel le dispositif mémoire (206) inclut en outre des instructions qui, lorsqu'elles sont mises en œuvre par l'au moins un processeur (204), amènent l'au moins un processeur (204) à déterminer, sur la base d'une information de retour qui indique un niveau sonore réel à l'intérieur de la cabine (108) d'opérateur, un signal pour au moins l'un parmi (a) réajuster le fonctionnement du dispositif d'émission sonore pour réduire davantage le niveau sonore réel à l'intérieur de la cabine (108) d'opérateur, et (b) ajuster le fonctionnement d'un dispositif d'émission sonore supplémentaire pour réduire davantage le niveau sonore réel à l'intérieur de la cabine (108) d'opérateur.

8. Système (200) de détection d'intelligence d'objet selon la revendication 1, dans lequel le dispositif mémoire (206) inclut en outre des instructions qui, lorsqu'elles sont mises en œuvre par l'au moins un processeur (204), amènent l'au moins un processeur (204) à :
déterminer qu'un emplacement de l'objet détecté est à moins d'une distance prédéterminée du véhicule de travail (100) ; et
générer, en réponse à la détermination que l'objet détecté est à moins de la distance prédéterminée, un signal supplémentaire pour activer un dispositif de sortie (118) du véhicule de travail (100), le dispositif de sortie comprenant au moins l'un parmi un dispositif d'éclairage (126) et un dispositif de retour haptique (122).

9. Système (200) de détection d'intelligence d'objet selon la revendication 1, dans lequel l'au moins un capteur (224, 226) est configuré pour capturer des informations sous la forme d'au moins un signal de détection émis par un dispositif détecté situé à l'extérieur du véhicule de travail (100).

10. Système (200) de détection d'intelligence d'objet selon la revendication 1, dans lequel l'au moins un capteur (224, 226) comprend un premier système de capteurs (224, 226) configuré pour détecter une première information capturée indicative d'une tâche qui est réalisée par le véhicule de travail (100) ;
dans lequel le système (200) de détection d'intelligence d'objet inclut en outre un premier dispositif d'émission sonore, qui, par un fonctionnement du premier dispositif d'émission sonore, génère ou émet un premier son qui est détectable par un opérateur à l'intérieur de la cabine (108) d'opérateur ; et
dans lequel le dispositif mémoire (206) inclut en outre des instructions qui, lorsqu'elles sont mises en œuvre par l'au moins un processeur (204), amènent l'au moins un processeur (204) à :
identifier, à partir au moins des premières informations capturées, la tâche qui est réalisée par le véhicule de travail (100) ;
déterminer que la tâche, telle qu'identifiée, se qualifie pour un premier ajustement du niveau sonore à l'intérieur de la cabine (108) d'opérateur ; et
générer, en réponse à la détermination que la tâche se qualifie pour l'ajustement du niveau sonore, un premier signal pour ajuster le fonctionnement du premier dispositif d'émission sonore d'une manière qui réduit le niveau sonore à un premier niveau sonore réduit.

11. Système (200) de détection d'intelligence d'objet selon la revendication 10, comprenant en outre :
un deuxième système de capteur (226, 228) configuré pour détecter une deuxième information capturée ; et
un deuxième dispositif d'émission sonore configuré pour un fonctionnement d'une manière qui génère ou émet un deuxième son qui est détectable par l'opérateur dans la cabine (108) d'opérateur,
dans lequel le dispositif mémoire (206) inclut en outre des instructions qui, lorsqu'elles sont mises en œuvre par l'au moins un processeur (204), amènent l'au moins un processeur (204) à :
détecter, à partir d'au moins la deuxième information capturée, un objet détecté ; et
générer, en réponse à au moins la détection de l'objet détecté, un deuxième signal pour ajuster le fonctionnement du deuxième dispositif d'émission sonore d'une manière qui réduit le premier niveau sonore réduit à l'intérieur de la cabine (108) d'opérateur à un deuxième niveau sonore réduit.

12. Système (200) de détection d'intelligence d'objet selon la revendication 10, comprenant en outre :
un système de localisation (216) configuré pour identifier un emplacement du véhicule de travail (100) ; et
dans lequel le dispositif mémoire (206) inclut en outre des instructions qui, lorsqu'elles sont mises en œuvre par l'au moins un processeur (204), amènent l'au moins un processeur (204) à :
déterminer l'emplacement du véhicule de travail (100) par rapport à un emplacement de zone de travail, l'emplacement de zone de travail étant identifié par le processeur (204) à partir d'une carte de projet ; et
générer, en réponse à la détermination de l'emplacement du véhicule de travail (100) par rapport à l'emplacement de zone de travail, un premier signal pour ajuster un fonctionnement du premier dispositif d'émission sonore d'une manière qui réduit le niveau sonore au premier niveau sonore réduit.

13. Système (200) de détection d'intelligence d'objet selon la revendication 12, comprenant en outre :
un deuxième système de capteur configuré pour détecter une deuxième information capturée ; et
un deuxième dispositif d'émission sonore configuré pour un fonctionnement d'une manière qui génère ou émet un deuxième son qui est détectable par l'opérateur dans la cabine (108) d'opérateur,
dans lequel le dispositif mémoire (206) inclut en outre des instructions qui, lorsqu'elles sont mises en œuvre par l'au moins un processeur (204), amènent l'au moins un processeur (204) à :
détecter, à partir d'au moins la deuxième information capturée, la présence d'un objet détecté ; et
générer, en réponse à au moins la détection de l'objet détecté, un deuxième signal pour ajuster le fonctionnement du deuxième dispositif d'émission sonore d'une manière qui réduit le niveau sonore à l'intérieur de la cabine (108) d'opérateur à un deuxième niveau sonore réduit, le deuxième niveau sonore réduit étant différent du premier niveau sonore réduit.
